# EUROPEAN PATENT SPECIFICATION

(11) **EP 3 995 341 B1**
(45) Date of publication and mention of the grant of the patent: **09.07.2025**
(21) Application number: 20206436.6
(22) Date of filing: 09.11.2020
(51) Int. Cl.: B60K 35/10, B60K 35/28, B60K 35/29, B60K 35/22, B60K 35/80

(54) **TRANSITIONING OF VEHICLE SPEED CONTROL FROM AN ADAS OR AD SYSTEM TO A DRIVER**
ÜBERGANG DER GESCHWINDIGKEITSREGELUNG EINES FAHRZEUGS VON EINEM ADAS- ODER AD-SYSTEM AUF EINEN FAHRER
PASSAGE DE COMMANDE DE VITESSE DE VÉHICULE D'UN SYSTÈME ADAS OU AD À UN CONDUCTEUR

(43) Date of publication of application: 11.05.2022
(73) Proprietor: Zenseact AB, 417 56 Göteborg (SE)
(72) Inventor: FU, Junsheng, 449 35 Nödinge (SE); XU, Sheng, 417 56 Göteborg (SE)
(74) Representative: Valea AB

(56) References cited:
- EP-A2- 2 753 487
- EP-B1- 2 753 487
- WO-A1-2019/189393
- US-A1- 2016 179 092
- US-A1- 2020 070 659

## Description

### TECHNICAL FIELD

The present invention relates to supporting transitioning of vehicle speed control from an ADAS or AD system of a vehicle, to a vehicle driver.

### BACKGROUND

An increasing number of modern vehicles have advanced driver-assistance systems, ADAS, to increase vehicle safety and more generally road safety. ADAS - which for instance may be represented by adaptive cruise control, ACC, lane departure avoidance, collision avoidance system, forward collision warning, etc. - are electronic systems that may aid a vehicle driver while driving. To function as intended, ADAS may rely on inputs from multiple data sources, such as e.g. LIDARs, radars, ultrasonics, cameras, automotive imaging, image processing, computer vision, and/or in-car networking.

Moreover, in a not too distant future, autonomous or automated driving systems, AD systems, will to greater extent find their way into modern vehicles. An AD system is a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An AD system commonly combines a variety of sensors to perceive the vehicle's surroundings, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

When a vehicle is under control of such an ADAS or AD system and a driver of said vehicle indicates that he or she wants to take over control - for instance vehicle speed control from e.g. an ACC system or similar system - said system commonly immediately stops sending control commands and/or requests, and hands over the control to the vehicle driver as soon and smooth as possible. However, transitioning of the control from said system to control by the vehicle driver may potentially come out less smooth than anticipated, which subsequently may cause passengers of the vehicle discomfort and/or even lead to hazardous situations.

The document WO 2019/189393 A1 discloses a method performed by a deviation assessment system of a vehicle for supporting transitioning of speed control from an advanced driver-assistance system, ADAS or AD system of said vehicle, to a vehicle driver, said method comprising: deriving a current system-initiated value of a speed-affecting system parameter pertinent speed control by said ADAS or AD system; deriving a value of a corresponding speed-affecting intervention parameter pertinent a driver-initiated speed-affecting intervention of said speed control; and presenting on a vehicle display a graphical representation indicative of a discrepancy between said system-initiated value and said driver-initiated value.

### SUMMARY OF THE INVENTION

It is therefore an object of embodiments herein to provide an approach for in an improved and/or alternative manner support transitioning of vehicle speed control from a vehicle ADAS or AD system to a vehicle driver.

The object above may be achieved by the subject-matter disclosed herein. Embodiments are set forth in the appended claims, in the following description and in the drawings.

The disclosed subject-matter relates to a method according to the subject-matter of claim 1.

The disclosed subject-matter further relates to a deviation assessment system of a vehicle for - and/or adapted for - supporting transitioning of speed control from an advanced driver-assistance system, ADAS, AD, system of the vehicle, to a vehicle driver. The deviation assessment system comprises a system value deriving unit for - and/or adapted for - deriving a current system-initiated value of a speed-affecting system parameter pertinent speed control by the ADAS or AD system. The deviation assessment system further comprises a driver value deriving unit for - and/or adapted for - deriving a value of a corresponding speed-affecting intervention parameter pertinent a driver-initiated speed-affecting intervention of the speed control. Moreover, the deviation assessment system comprises a discrepancy presenting unit for - and/or adapted for - presenting on a vehicle display a graphical representation indicative of a discrepancy between the system-initiated value and the driver-initiated value.

Furthermore, the disclosed invention relates to a vehicle comprising a deviation assessment system as defined by the subject-matter of independent claim 7.

Moreover, the disclosed subject-matter relates to a computer program product comprising a computer program containing computer program code means arranged to cause a computer or a processor to execute the steps of the deviation assessment system described herein, stored on a computer-readable medium or a carrier wave.

The disclosed subject-matter further relates to a non-volatile computer readable storage medium having stored thereon said computer program product.

Thereby, there is introduced an approach according to which assistance is provided for enabling handover of speed control from an ADAS or AD system of a vehicle to a driver thereof, to be carried out smoothly. That is, since there is derived a current system-initiated value of a speed-affecting system parameter pertinent speed control by the ADAS or AD system, there is read and/or fetched a value of a control parameter of the ADAS or AD system indicative of a quantity - e.g. amount of brake torque or acceleration - utilized by the ADAS or AD system for adapting and/or controlling the vehicle speed to comply with a desired speed and/or target speed, such as in view of an exemplifying leading vehicle. Moreover, that is, since there is derived a value of a corresponding speed-affecting intervention parameter pertinent a driver-initiated speed-affecting intervention of the speed control, there is read and/or fetched a value of a control parameter provided by driver intervention of the speed control indicative of a quantity - e.g. amount of brake force or torque or acceleration force - applied and/or provided by the driver through e.g. a brake or acceleration pedal. Furthermore, that is, since there is presented on a vehicle display a graphical representation indicative of a discrepancy between the system-initiated value and the driver-initiated value, there is provided in an illustrative manner the difference between said values. Accordingly, by presenting a graphical representation illustrative of how the value of the speed-affecting intervention parameter differs from the value of the speed-affecting system parameter, the vehicle driver may be advised in an intuitive manner of how close and/or how far off his or her intervention maneuver - e.g. brake torque rendered from applied brake force, or acceleration force - lies the speed control - e.g. brake torque or acceleration - of the ADAS or AD system, and hence subsequently adjust his or her speed control input accordingly. Thus - should for instance an exemplifying leading vehicle be slowing down and//or driving at a lower speed than the ego vehicle and the vehicle driver subsequently intervening the ADAS or AD speed control by braking manually - a difference in brake torque rendered from brake force applied by the vehicle driver as compared to brake torque applied by the ADAS or AD system, is graphically provided, thus presenting the vehicle driver with the opportunity to intuitively grasp how well his or her braking maneuver(s) correspond with the braking maneuver of the ADAS or AD system and to adapt accordingly by braking lesser or harder. Thereby, there may be avoided and/or mitigated scenarios of making the vehicle jerk and/or passengers of the vehicle potentially experiencing the vehicle speeding up, during transition of speed control from the ADAS or AD system to the vehicle driver.

For that reason, an approach is provided for in an improved and/or alternative manner support transitioning of vehicle speed control from a vehicle ADAS or AD system to a vehicle driver.

The technical features and corresponding advantages will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
Fig. 1 illustrates a schematic view of an exemplifying deviation assessment system according to embodiments of the disclosure;
Fig. 2 illustrate schematic views of exemplifying deviation assessment system outcomes according to embodiments of the disclosure;
Fig. 3 is a schematic block diagram illustrating an exemplifying deviation assessment system according to embodiments of the disclosure; and
Fig. 4 is a flowchart depicting an exemplifying method performed by a deviation assessment system according to embodiments of the disclosure.

### DETAILED DESCRIPTION

Non-limiting embodiments of the present invention will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting transitioning of vehicle speed control from an ADAS or AD system of a vehicle to a driver thereof, there will be disclosed an approach according to which assistance is provided enabling such handover to be carried out smoothly.

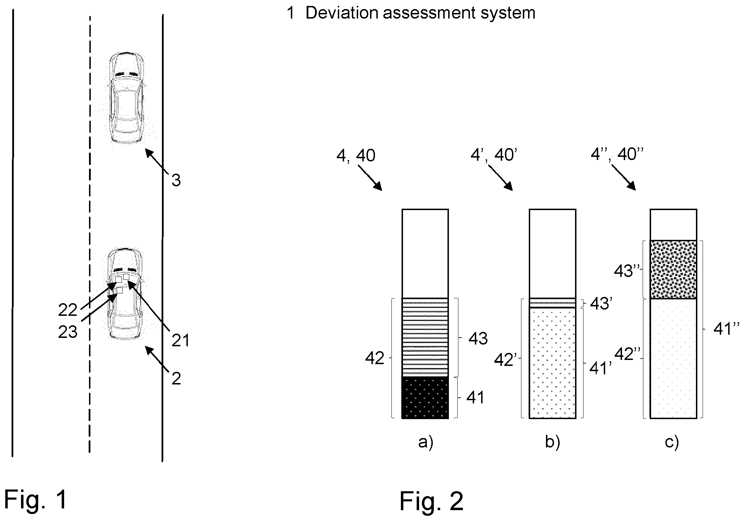

Referring now to the figures, there is depicted in Figs. 1-3 a respective schematic view and schematic block diagram of an exemplifying **deviation assessment system 1** - and exemplifying outcomes thereof - all according to embodiments of the disclosure. The overtaking system 1 is provided on-board a **vehicle 2,** for instance comprised therein. Moreover, the deviation assessment system 1 is adapted for supporting transitioning of speed control from an **ADAS or AD system 21** of the vehicle 2, to a vehicle driver (not shown). The exemplifying vehicle 2 has - or initially has or such as at an exemplifying first time point has - the ADAS or AD system 21 engaged, with speed control provided by said ADAS or AD system 21, for instance in the form of adaptive cruise control in a known manner adapting vehicle speed. Said vehicle speed may for instance - as illustrated in Fig. 1 - be adapted to a **leading vehicle 3,** driving ahead.

The exemplifying vehicle 2 may be represented by any arbitrary - e.g. known - manned or unmanned vehicle, for instance an engine-propelled or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle", accomplished with support from the ADAS or AD system 21. Said ADAS or AD system 21 may refer to any arbitrary ADAS and/or AD system supporting speed control of the vehicle 2, e.g. known in the art and/or yet to be developed. The ADAS or AD system 21 may, as indicated above, according to an example refer to an ACC system - commonly synonymous with e.g. an active cruise control system, automatic distance control system, automatic cruise control system and/or autonomous intelligent cruise control system - and/or an equivalent or successor thereof. Moreover, the vehicle 2 and/or the ADAS or AD system 21 may comprise, be provided with and/or have on-board an optional perception system (not shown) and/or similar system and/or functionality adapted to estimate surroundings of the vehicle 2, and subsequently adapted to estimate world views of the surroundings e.g. with support from a - e.g. commonly known - digital map (not shown) such as a high definition, HD, map, and/or an equivalent and/or successor thereof. Such an exemplifying perception system or similar system may refer to any commonly known system and/or functionality, e.g. comprised in one or more electronic control modules, ECUs, and/or nodes of the vehicle 2 and/or the ADAS or AD system 21, adapted and/or configured to interpret sensory information - relevant for driving of the vehicle 2 - to identify e.g. objects such as the exemplifying leading vehicle 3, obstacles, vehicle lanes, relevant signage, appropriate navigation paths etc. The exemplifying perception system or similar system - which may be adapted to support e.g. sensor fusion, tracking, localization etc. - may thus be adapted to rely on sensory information. Such exemplifying sensory information may for instance be derived from one or more - e.g. commonly known - sensors comprised in and/or provided on-board the vehicle 2 adapted to sense and/or perceive the vehicle's 2 whereabouts and/or surroundings, for instance represented by one or a combination of one or more of a positioning system, odometer, inertial measurement units and/or surrounding detecting sensors, such as image capturing devices e.g. cameras, radar, lidar, ultrasonics etc.

Furthermore, the phrase "deviation assessment system" may refer to "handover, transitioning, overriding, ramp out and/or disengagement assessment system" and/or "deviation monitoring, evaluating and/or presenting system", whereas "deviation assessment system of a vehicle" may refer to "deviation assessment system on-board and/or at least partly comprised in a vehicle". The phrase "for supporting transitioning of speed control", on the other hand, may refer to "for supporting at least temporary transitioning of speed control", "for assisting during transitioning of speed control", "for supporting smoot transitioning of speed control" and/or "for presenting status information pertinent transitioning of speed control", whereas "speed control" may refer to "vehicle speed control" and/or "control of speed of said vehicle". Moreover, "speed control" may according to an example refer to "speed adaptation control". Furthermore, according to an example, the phrase "for supporting transitioning of speed control from an ADAS or AD system of said vehicle, to a vehicle driver" may refer to "for supporting handover and/or ramp out of speed control from an ADAS or AD system of said vehicle, to a vehicle driver", "for supporting overriding of speed control of an ADAS or AD system of said vehicle, by a vehicle driver" and/or "for supporting disengagement by a vehicle driver of a speed control-supporting ADAS or AD system of said vehicle".

The deviation assessment system 1 is - e.g. by means of a **system value deriving unit 101** - adapted and/or configured for deriving a current system-initiated value of a speed-affecting system parameter pertinent speed control by the ADAS or AD system 21. Thereby, there is read and/or fetched a value of a control parameter of the ADAS or AD system 21 - e.g. of a brake torque control parameter or acceleration control parameter - indicative of a quantity - e.g. amount of brake torque or acceleration - utilized by the ADAS or AD system 21 for adapting and/or controlling the vehicle speed to comply with a desired speed and/or target speed, such as in view of the exemplifying leading vehicle 3. Accordingly - should for instance the exemplifying leading vehicle 3 be slowing down and//or driving at a lower speed than vehicle 2 and the ADAS or AD system 21 in a known manner adapt vehicle speed control accordingly - said speed-affecting system parameter value may optionally be indicative of a brake torque.

The speed-affecting system parameter value may be derived in any arbitrary - e.g. known - manner, such as by reading and/or fetching said value from the ADAS or AD system 21 and/or system associated therewith. Moreover, said speed-affecting system parameter may be represented by any parameter associated with the ADAS or AD system 21 speed control, such as a control parameter indicative of, reflecting and/or providing a quantity of said speed control, such as a brake torque quantifying control parameter or acceleration quantifying control parameter. The phrase "deriving a current system-initiated value" may refer to "reading, fetching, receiving and/or determining a current system-initiated value", "deriving an essentially current system-initiated value", "deriving a system-initiated value at a first time point", "deriving a current system-initiated quantity" and/or merely "deriving a current value". The phrase "system-initiated value of a speed-affecting system parameter", on the other hand, may refer to "system-initiated value of a speed-affecting system variable", "system-initiated value of a speed-affecting control parameter" and/or merely "system-initiated value of a speed-affecting parameter", and according to an example further to "system-initiated value of a brake torque reflecting system parameter and/or acceleration reflecting system parameter". Furthermore, "value" may throughout this disclosure refer to "at least a first value and/or one or more values", whereas "parameter" similarly may refer to "one or more parameters". Moreover, the phrase "speed-affecting system parameter pertinent speed control" may refer to "speed-affecting system parameter controlling speed and/or being used as input for speed control", and according to an example further to "speed-affecting system parameter pertinent speed control, said speed-affecting system parameter being indicative of quantity, extent, amount and/or degree of acceleration and/or brake torque".

Furthermore, the deviation assessment system 1 is - e.g. by means of a driver value deriving unit 102 - adapted and/or configured for deriving a value of a corresponding speed-affecting intervention parameter pertinent a driver-initiated speed-affecting intervention of said speed control. Thereby, following intervention by the vehicle driver - for instance rendered from said driver deciding to take manual control of the vehicle speed - there is read and/or fetched a value of a control parameter provided by the driver through said intervention - e.g. of a brake force or torque control parameter or acceleration control parameter - indicative of a quantity - e.g. amount of brake force or torque or acceleration force - applied and/or provided by the driver through a **speed-affecting driver input device 22** such as a brake or acceleration pedal and/or input device. Accordingly - should for instance the exemplifying leading vehicle 3 as previously exemplified be slowing down and//or driving at a lower speed, and the vehicle driver 2 subsequently intervening the ADAS or AD 21 speed control by braking manually - said driver-initiated speed-affecting intervention parameter value may optionally be indicative of a brake force or torque, for instance proportional to a force of said intervention applied to the speed-affecting driver input device 22.

Said intervention may be represented by the driver in a known manner intervening in the ADAS or AD system 21 speed control by providing driver input - subsequently the value of the speed-affecting intervention parameter - via the speed-affecting driver input device 22, for instance represented by the driver applying a force via a brake or acceleration pedal. Moreover, the speed-affecting intervention parameter value may be derived in any arbitrary - e.g. known - manner, such as by reading and/or fetching said value e.g. from control unit(s) e.g. ECU(s) of said vehicle 2 handling driver input provided via the speed-affecting driver input device(s) 22. Furthermore, said speed-affecting intervention parameter may be represented by any parameter associated with driver-initiated speed control, such as a control parameter indicative of, reflecting, proportional to and/or providing a quantity of said intervention via the speed-affecting driver input device 22, such as a brake force or torque quantifying control parameter or acceleration force quantifying control parameter. According to an example, the value of the speed-affecting intervention parameter may need to exceed a predeterminable minimum intervention threshold to be deemed intervening the ADAS or AD system 21 speed control, and would then, should said speed-affecting intervention parameter value fall below said minimum intervention threshold, not be deemed to qualify as an intervention.

The phrase "deriving a value of a corresponding speed-affecting intervention parameter" may refer to "reading, fetching and/or receiving a value of a corresponding speed-affecting intervention parameter", "deriving a value of a - with said speed-affecting system parameter corresponding, matching and/or similar - speed-affecting intervention parameter", "deriving at - or essentially at - said first time point a value of a corresponding speed-affecting intervention parameter", "deriving a quantity of a corresponding speed-affecting intervention parameter" and/or "deriving a driver-initiated and/or intervention-initiated value of a corresponding speed-affecting intervention parameter". The phrase "speed-affecting intervention parameter", on the other hand, may refer to "speed-affecting intervention variable", "speed-affecting intervention control parameter" and/or merely "speed-affecting parameter", and according to an example further to "brake force reflecting intervention parameter and/or acceleration force reflecting intervention parameter". Moreover, the phrase "speed-affecting intervention parameter pertinent a driver-initiated speed-affecting intervention of said speed control" may refer to "speed-affecting intervention parameter pertinent a detected driver-initiated speed-affecting intervention of said speed control" and/or "speed-affecting intervention parameter controlling speed and/or being used as input for speed control provided by driver intervention", and according to an example further to "speed-affecting intervention parameter pertinent a driver-initiated speed-affecting intervention of said speed control, said speed-affecting intervention parameter being indicative of quantity, extent, amount and/or degree of acceleration force and/or brake force or torque" and/or "speed-affecting intervention parameter pertinent a driver-initiated speed-affecting intervention of said speed control, said intervention comprising intervention by means of a speed-affecting driver input device, e.g. a brake or acceleration pedal and/or input device".

As depicted in an exemplifying manner in **Fig. 2a****,** the deviation assessment system 1 is - e.g. by means of a **discrepancy presenting unit 103** - adapted and/or configured for presenting on a **vehicle display 23 a graphical representation 4** indicative of a **discrepancy** between the system-initiated value and the driver-initiated value. Thereby, there is provided in an illustrative manner the difference between the speed-affecting system parameter value pertinent the speed control of the ADAS or AD system 21 - e.g. representative of a brake torque or acceleration controlled by the ADAS or AD system 21 - and the speed-affecting intervention parameter value pertinent the driver-initiated speed-affecting intervention, e.g. representative of a brake torque or acceleration rendered from a brake or acceleration force applied by the vehicle driver. Accordingly, by presenting a graphical representation 4 illustrative of how the value of the speed-affecting intervention parameter differs from the value of the speed-affecting system parameter, the vehicle driver may be advised in an intuitive manner of how close and/or how far off his or her intervention maneuver - e.g. brake torque rendered from applied brake force, or acceleration force - lies the speed control - e.g. brake torque or acceleration - of the ADAS or AD system 21, and hence subsequently adjust his or her speed control input - e.g. applied brake or acceleration force - accordingly. Thus - should for instance the exemplifying leading vehicle 3 as previously exemplified be slowing down and//or driving at a lower speed and the vehicle driver 2 subsequently intervening the ADAS or AD 21 speed control by braking manually - a difference in brake torque rendered from brake force applied by the vehicle driver as compared to brake torque applied by the ADAS or AD system 21 is graphically provided, thus presenting the vehicle driver with the opportunity to intuitively grasp how well his or her braking maneuver(s) correspond with the braking maneuver of the ADAS or AD system 21 and to adapt accordingly by braking lesser or harder. Thereby, there may be avoided and/or mitigated scenarios of making the vehicle 2 jerk and/or passengers of the vehicle 2 potentially experiencing the vehicle speeding up, during transition of speed control from the ADAS or AD system 21 to the vehicle driver.

Presenting the graphical representation 4 on a vehicle display 23 may be represented by said graphical representation 4 being provided on one or more displays 23 on-board - and/or comprised in - said vehicle 2. The vehicle display 23 may be represented by any feasible display known in the art, such as a digital display, for instance comprised in a vehicle dashboard, and/or a head-up display e.g. projected on a windscreen of the vehicle 2. Moreover, said graphical representation 4 may be represented by any arbitrary feasible illustration or illustrations representative of a difference between the system-initiated value and the driver-initiated value, such as for instance an illustration 4 indicative of a difference between a system-initiated brake torque or acceleration, and a driver-initiated brake torque and/or force or acceleration. Moreover, the graphical representation 4 may be of any arbitrary feasible dimensions, and further comprise any arbitrary colour and/or pattern settings and/or schemes. The graphical representation 4 may accordingly be represented by any arbitrary feasible illustration of said driver-initiated value in comparison to any arbitrary feasible illustration of said system-initiated value, such as for instance an illustration representative of said driver-initiated value as a portion of an illustration representative of said system-initiated value, e.g. as a bar portion thereof and/or in relation thereto, and/or as a pie portion thereof and/or in relation thereto.

The phrase "presenting on a vehicle display" may refer to "providing and/or illustrating on a vehicle display" and/or "presenting on one or more displays on-board and/or at least partly comprised in said vehicle", whereas "a graphical representation" may refer to "one or more graphical representations" and/or "illustration". "Graphical representation indicative of a discrepancy", on the other hand, may refer to "graphical representation representative of, illustrating and/or rendering a discrepancy". Moreover, "graphical representation indicative of a discrepancy between said system-initiated value and said driver-initiated value" may refer to "graphical representation indicative of a deviation, difference and/or mismatch between said system-initiated value and said driver-initiated value" and/or merely "graphical representation indicative of said system-initiated value relative said driver-initiated value", and according to an example further to "graphical representation indicative of a discrepancy between said system-initiated value and said driver-initiated value, such as an illustration representative of said driver-initiated value in comparison to - for instance as a portion e.g. as a bar portion and/or pie portion of or relative - an illustration representative of said system-initiated value".

In exemplifying Fig. 2a, the graphical representation 4 is in an exemplifying manner depicted to comprise a **bar 40,** the height of which optionally may represent a maximum parameter value, such as for instance maximum brake torque or maximum acceleration. The bar 40 comprises in an exemplifying manner a **portion 41** representative of the driver-initiated value and a **portion 42** representative of the system-initiated value, a **difference 43** between said portions 41, 42 - here in an exemplifying manner in bar height - providing and subsequently illustrating the discrepancy between the system-initiated value and the driver-initiated value. Moreover, in exemplifying Fig. 2a, the portion 41 representative of the driver-initiated value is in an exemplifying manner depicted to reach up to an exemplifying merely third of the portion 42 representative of the system-initiated value, thus rendering the difference 43 between said portions 41, 42 relatively significant. Consequently, it may be derived from the graphical representation 4 of exemplifying Fig. 2a, that the discrepancy between the system-initiated value and the driver-initiated value correspondingly may be relatively significant, which for instance may be due to the vehicle driver braking or accelerating significantly less than the ADAS or AD system 21. This in turn may insinuate that during the transition of speed control from the ADAS or AD system 21 to the vehicle driver, the vehicle 2 may be in risk of potentially making a jerk should the driver not adapt his or her braking or acceleration to near that of the ADAS or AD system 21.

Optionally, the discrepancy presenting unit may be adapted for presenting at least a portion of the graphical representation 4, e.g. representing the driver-initiated value, according to a first colour setting when the discrepancy is below a primary deviation threshold, and according to a differing second colour setting when the discrepancy exceeds said primary deviation threshold. Thereby, by distinguishing between whether said primary deviation threshold is exceeded, and subsequently distinguishing between whether the driver-initiated value - e.g. pertinent driver-initiated brake force or torque, or acceleration force - is deemed to relatively significantly differ from the system-initiated value - e.g. system-initiated brake torque or acceleration - and present the graphical representation 4 with differing colour settings depending thereon, the graphical representation 4 may - as exemplified in Fig. 2a - be presented in a comparably more eye-catching, emphasized and/or highlighted manner, e.g. comprising reddish tones and/or hues, should the discrepancy exceed said primary deviation threshold.

The primary deviation threshold may be represented by any feasible threshold and/or limit applicable and/or deemed relevant for the implementation at hand, and may for instance be expressed in absolute value(s) or percentage(s). Furthermore, the first colour setting may be represented by any feasible combination of colours, according to an example for instance comprising - such as e.g. the illustration of the of the driver-initiated value comprising - greenish tones and/or hues. Similarly, the second colour setting may be represented by any feasible combination of colours, according to an example for instance comprising - such as e.g. the illustration of the driver-initiated value comprising - reddish tones and/or hues. Moreover, further thresholds with differing limits may additionally be implemented, thus supporting yet further differing colour settings alternatives. The phrase "primary deviation threshold" may refer to "predeterminable primary deviation threshold", "first deviation threshold" and/or merely "deviation threshold", whereas "colour setting" may refer to "colour scheme" and/or "colour tones and/or hues settings".

Further optionally, the deviation assessment system 1 may - e.g. by means of an optional **ramp out unit 104** - be adapted and/or configured for ramping out the speed control, said ramping out ongoing for a first time duration when the discrepancy is below a secondary deviation threshold, and ongoing for a differing second time duration when the deviation exceeds the secondary deviation threshold. Thereby, by distinguishing between whether said secondary deviation threshold is exceeded, and subsequently distinguishing between whether the driver-initiated value - e.g. pertinent driver-initiated brake force or torque, or acceleration force - is deemed to relatively significantly differ from the system-initiated value - e.g. system-initiated brake torque or acceleration - and adapting ramp out of the speed control depending thereon, said ramping out may be ongoing for a comparably longer period of time should the discrepancy exceed said secondary deviation threshold. Thus - should for instance the vehicle driver as previously exemplified be braking manually with a relatively modest force as compared to the ADAS or AD system 21 - the ADAS or AD system 21 speed control may be phased out during a relatively more extensive period of time for a less abrupt handover. Accordingly, a smoother transitioning may be accomplished, thus implying that there to even greater extent may be avoided and/or mitigated scenarios of making the vehicle 2 jerk and/or passengers of the vehicle 2 potentially experiencing the vehicle speeding up, during transition of speed control from the ADAS or AD system 21 to the vehicle driver.

The secondary deviation threshold - which may or may not equate to the optional primary deviation threshold discussed above - may be represented by any feasible threshold and/or limit applicable and/or deemed relevant for the implementation at hand, and may for instance be expressed in absolute value(s) or percentage(s). Furthermore, the ramping out of the speed control may be accomplished in any feasible manner, for instance step-wise or continuously. Moreover, the first ramp out time duration may be represented by any feasible period of time, according to an example being instant and hence essentially zero, according to another example ongoing less than for instance 1, 10 or 100 milliseconds, or 1 second, starting from - or essentially from - the point of time of the driver intervention. Similarly, the second ramp out time duration may be represented by any feasible period of time longer than said first period of time, according to an example ongoing longer than for instance 100 milliseconds, or e.g. 1, 3 or 5 seconds, while for instance ongoing shorter than e.g. 5, 10 or 15 seconds. Moreover, further thresholds with differing limits may additionally be implemented, thus supporting yet further differing ramp out time duration alternatives. The phrase "ramping out said speed control" may refer to "phasing out and/or transitioning said speed control", and according to an example further to "handing over, overriding and/or disengaging said speed control". The phrase "secondary deviation threshold", on the other hand, may refer to "predeterminable secondary deviation threshold", "second deviation threshold" and/or merely "deviation threshold", whereas "second time duration" may refer to "second time duration longer than said first time duration".

Moreover, optionally, the deviation assessment system 1 may - e.g. by means of an optional **updated system value deriving unit 105 -** be adapted and/or configured for deriving an updated system-initiated value of the speed-affecting system parameter. The deviation assessment system 1 may then - e.g. by means of an optional **updated driver value deriving unit 106** - be adapted and/or configured for deriving an updated driver-initiated value of the speed-affecting intervention parameter. Moreover, as depicted in exemplifying **Fig. 2b****,** the assessment system 1 may then further - e.g. by means of an optional **updated discrepancy presenting unit 107** - be adapted and/or configured for presenting an updated graphical representation 4' indicative of an updated discrepancy between the updated system-initiated value and the updated driver-initiated value.

Thereby, there is provided in an illustrative manner an updated difference between an updated - potentially the same as previously derived - speed-affecting system parameter value pertinent the speed control of the ADAS or AD system 21, and an updated speed-affecting intervention parameter value pertinent the driver-initiated speed-affecting intervention, e.g. derived at an exemplifying subsequent time point. Accordingly, by presenting an updated graphical representation 4' illustrative of how the updated value of the speed-affecting intervention parameter differs from the updated value of the speed-affecting system parameter, the vehicle driver may be advised in an intuitive manner of how his or her ongoing intervention maneuver - e.g. brake torque rendered from applied brake force, or acceleration force - is in compliance with and/or nearing the speed control - e.g. brake torque or acceleration - of the ADAS or AD system 21, and hence subsequently potentially continue to adjust his or her speed control input - e.g. applied brake or acceleration force - accordingly.

In exemplifying Fig. 2b, the bar 40' of the updated graphical representation 4' comprises in an exemplifying manner a portion 41' representative of the updated driver-initiated value and a portion 42' representative of the updated system-initiated value, a difference 43' between said portions 41', 42' providing and subsequently illustrating the updated discrepancy between the updated system-initiated value and the updated driver-initiated value. In Fig. 2b, the updated deviation is in an exemplifying manner assumed to fall below the optional primary deviation threshold, whereby the graphical representation 4' is depicted to comprise a first colour setting - e.g. comprising greenish tones and/or hues - which may be comparably less eye-catching for instance as compared to the graphical representation 4 of Fig. 2a for which the primary deviation threshold in an exemplifying manner was deemed exceeded.

Further optionally, the deviation assessment system 1 may - e.g. by means of an optional **reference value deriving unit 108** - be adapted and/or configured for deriving, subsequent the optional ramp out of the speed control, a fictive reference value of the speed-affecting system parameter indicating a value applicable should the speed control of the AD or ADAS system 21 have been engaged. The deviation assessment system 1 may then - e.g. by means of an optional **subsequent driver value deriving unit 109** - be adapted and/or configured for deriving a subsequent driver-initiated value of the speed-affecting intervention parameter. Moreover, as depicted in exemplifying **Fig. 2c****,** the assessment system 1 may then further - e.g. by means of an optional **subsequent discrepancy presenting unit 110** - be adapted and/or configured for presenting a subsequent graphical representation 4" indicative of a discrepancy between the fictive reference value and the subsequent driver-initiated value. Thereby, there is provided in an illustrative manner - after the speed control has been ramped out - a difference between a hypothetical speed-affecting system parameter value pertinent the speed control of the ADAS or AD system 21 which represents a reference value that would have been applicable if the speed control had still been engaged, and a newly derived speed-affecting intervention parameter value pertinent the driver-initiated speed-affecting intervention, e.g. derived at an exemplifying subsequent time point. Accordingly, by presenting subsequent the speed control has been handed over, a graphical representation 4" illustrative of how the subsequent value of the speed-affecting intervention parameter differs from the fictive reference value of the speed-affecting system parameter, the vehicle driver may be advised in an intuitive manner of how his or her ongoing intervention maneuver - e.g. brake torque rendered from applied brake force, or acceleration force - is in compliance with and/or nearing the hypothetical reference speed control - e.g. brake torque or acceleration - of the ADAS or AD system 21, and hence subsequently potentially continue to adjust his or her speed control input - e.g. applied brake or acceleration force - accordingly.

In exemplifying Fig. 2c, the bar 40" of the subsequent graphical representation 4" comprises in an exemplifying manner a portion 41" representative of the subsequent driver-initiated value and a portion 42" representative of the fictive reference value of the speed-affecting system parameter, a difference 43" between said portions 41", 42" providing and subsequently illustrating the subsequent discrepancy between the fictive reference value and the subsequent driver-initiated value. In Fig. 2c, the portion 41" representative of the subsequent driver-initiated value is in an exemplifying manner depicted to reach higher than the portion 42" representative of the fictive reference value, thus translating into that the subsequent driver-initiated value is greater than the fictive reference value, e.g. represented by the vehicle driver applying more extensive brake force and/or torque or acceleration than recommended and/or suggested by the fictive reference value of the AD or ADAS system 21 speed-affecting system parameter.

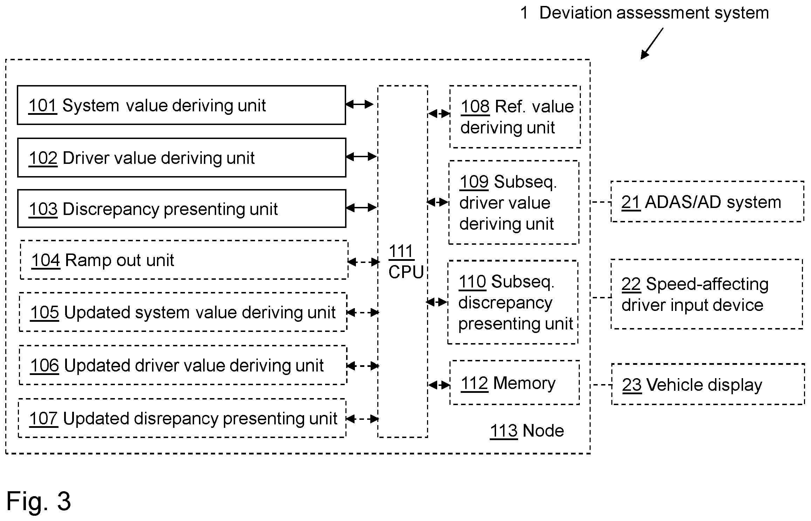

As further shown in **Fig. 3****,** which is a schematic block diagram illustrating an exemplifying deviation assessment system 1 according to embodiments of the disclosure, the deviation assessment system 1 comprises a system value deriving unit 101, a driver value deriving unit 102, a discrepancy presenting unit 103, an optional ramp out unit 104, an optional updated system value deriving unit 105, an updated driver value deriving unit 106, an optional updated discrepancy presenting unit 107, an optional reference value deriving unit 108, an optional subsequent driver value deriving unit 109, an optional subsequent discrepancy presenting unit 110, all of which already have been described in greater detail above. Furthermore, the embodiments herein for supporting transitioning of speed control from an ADAS or AD system 21 of a vehicle 2 to a driver of said vehicle 2, may be implemented through one or more processors, such as a **processor 111** - for instance a graphics processing unit, GPU, and/or a central processing unit, CPU - together with computer program code for performing the functions and actions of the embodiments herein. Said program code may also be provided as a computer program product, for instance in the form of a data carrier carrying computer program code for performing the embodiments herein when being loaded into the deviation assessment system 1. One such carrier may be in the form of a CD ROM disc and/or a hard drive, it is however feasible with other data carriers. The computer program code may furthermore be provided as pure program code on a server and downloaded to the deviation assessment system 1. The deviation assessment system 1 may further comprise a **memory 112** comprising one or more memory units. The memory 112 may be arranged to be used to store e.g. information, and further to store data, configurations, schedulings, and applications, to perform the methods herein when being executed in the deviation assessment system 1. For instance, the computer program code may be implemented in the firmware, stored in FLASH memory 112 of an embedded processor 111, and/or downloaded wirelessly e.g. from an off-board server. Furthermore, the system value deriving unit 101, the driver value deriving unit 102, the discrepancy presenting unit 103, the optional ramp out unit 104, the optional updated system value deriving unit 105, the updated driver value deriving unit 106, the optional updated discrepancy presenting unit 107, the optional reference value deriving unit 108, the optional subsequent driver value deriving unit 109, the optional subsequent discrepancy presenting unit 110, the optional processor 111 and/or the optional memory 112, may at least partly be comprised in one or more **nodes 113** e.g. ECUs of the vehicle 2, e.g. in and/or in association with the ADAS or ADS system 21. Those skilled in the art will also appreciate that said units 101-110 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 112, that when executed by the one or more processors such as the processor 111 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

Further shown in Fig. 3 is the ADAS or AD system 21, the speed-affecting driver input device 22 and the vehicle display 23, all of which have been discussed in greater detail above.

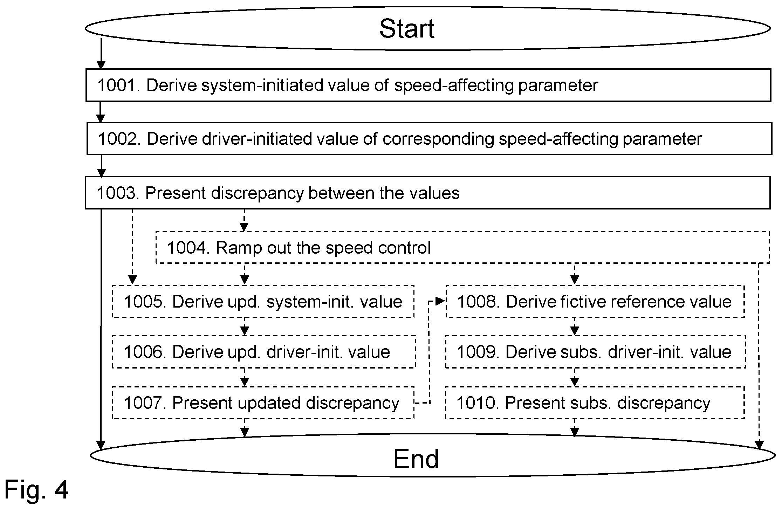

**Fig. 4** is a flowchart depicting an exemplifying method performed by a deviation assessment system 1 according to embodiments of the disclosure. Said method is for supporting transitioning of speed control from an ADAS or AD system 21 of a vehicle 2 to a driver of said vehicle 2. The exemplifying method, which may be continuously repeated, comprises one or more of the following actions discussed with support from Figs. 1-3. Moreover, the actions may be taken in any suitable order and/or one or more actions may be performed simultaneously and/or in alternate order where applicable. For instance, optional Actions 1005-1007 and optional Actions 1008-1010 may be performed simultaneously and/or in alternate order.

### Action 1001

In Action 1001, the deviation assessment system 1 derives - e.g. with support from the system value deriving unit 101 - a current system-initiated value of a speed-affecting system parameter pertinent speed control by the ADAS or AD system 21.

Optionally, the system-initiated value may be indicative of a brake torque.

### Action 1002

In Action 1002, the deviation assessment system 1 derives - e.g. with support from the driver value deriving unit 102 - a value of a corresponding speed-affecting intervention parameter pertinent a driver-initiated speed-affecting intervention of said speed control.

Optionally, the driver-initiated value may be indicative of a brake torque and/or force.

### Action 1003

In Action 1003, the deviation assessment system 1 presents - e.g. with support from the discrepancy presenting unit 103 - on a vehicle display 23, a graphical representation 4 indicative of a discrepancy between the system-initiated value and the driver-initiated value.

Optionally, Action 1003 of presenting a graphical representation 4 may comprise presenting at least a portion of the graphical representation 4, e.g. representing the driver-initiated value, according to a first colour setting when the discrepancy is below a primary deviation threshold, and according to a differing second colour setting when the discrepancy exceeds the primary deviation threshold.

### Action 1004

In optional Action 1004, the deviation assessment system 1 may ramp out - e.g. with support from the optional ramp out unit 104 - the speed control, said ramping out ongoing for a first time duration when the discrepancy is below a secondary deviation threshold, and ongoing for a differing second time duration when the deviation exceeds the secondary deviation threshold.

### Action 1005

In optional Action 1005, the deviation assessment system 1 may derive - e.g. with support from the optional updated system value deriving unit 105 - an updated system-initiated value of the speed-affecting system parameter.

### Action 1006

In optional Action 1006, the deviation assessment system 1 may derive - e.g. with support from the optional updated driver value deriving unit 106 - an updated driver-initiated value of the speed-affecting intervention parameter.

### Action 1007

In optional Action 1007, the deviation assessment system 1 may present - e.g. with support from the optional updated discrepancy presenting unit 107 - an updated graphical representation 4' indicative of an updated discrepancy between the updated system-initiated value and the updated driver-initiated value.

### Action 1008

In optional Action 1008, the deviation assessment system 1 may, subsequent Action 1004 of ramping out the speed control, derive - e.g. with support from the optional reference value deriving unit 108 - a fictive reference value of the speed-affecting system parameter indicating a value applicable should the speed control have been engaged.

### Action 1009

In optional Action 1009, the deviation assessment system 1 may derive - e.g. with support from the optional subsequent driver value deriving unit 109 - a subsequent driver-initiated value of the speed-affecting intervention parameter.

### Action 1010

In optional Action 1010, the deviation assessment system 1 may present - e.g. with support from the optional subsequent discrepancy presenting unit 110 - a subsequent graphical representation 4" indicative of a discrepancy between the fictive reference value and the subsequent driver-initiated value.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a deviation assessment system (1) of a vehicle (2) for supporting transitioning of speed control from an advanced driver-assistance system, ADAS, or AD, system (21) of said vehicle (2), to a vehicle driver, said method comprising:
***deriving*** (1001) a current system-initiated value of a speed-affecting system parameter pertinent to speed control by said ADAS or AD system (21), said speed-affecting system parameter being indicative of a brake force or torque utilized by said ADAS or AD system (21);
***deriving*** (1002) a value of a corresponding speed-affecting intervention parameter pertinent to a driver-initiated speed-affecting intervention of said speed control, said speed-affecting intervention parameter being indicative of a brake force or torque proportional to a force of the intervention applied by the vehicle driver to a speed-affecting driver input device (22) comprising a brake pedal or brake input device; and
following the transitioning of speed control from said ADAS or AD system (21) to said vehicle driver, ***presenting*** (1003) on a vehicle display (23) a graphical representation (4) indicative of a discrepancy between said system-initiated value and said driver-initiated value.

2. The method according to claim 1, wherein said ***presenting*** (1003) a graphical representation (4) comprises presenting at least a portion of said graphical representation (4), e.g. representing the driver-initiated value, according to a first colour setting when said discrepancy is below a primary deviation threshold, and according to a differing second colour setting when said discrepancy exceeds said primary deviation threshold.

3. The method according to claim 1 or 2, further comprising:
***ramping out*** (1004) said speed control, said ramping out ongoing for a first time duration when said discrepancy is below a secondary deviation threshold, and ongoing for a differing second time duration when said deviation exceeds said secondary deviation threshold.

4. The method according to any one of claims 1-3, further comprising:
***deriving*** (1005) an updated system-initiated value of said speed-affecting system parameter;
***deriving*** (1006) an updated driver-initiated value of said speed-affecting intervention parameter; and
***presenting*** (1007) an updated graphical representation (4') indicative of an updated discrepancy between said updated system-initiated value and said updated driver-initiated value.

5. The method according to claim 3 or 4, further comprising;
***deriving*** (1008) subsequent said ***ramping out*** (1004) the speed control, a fictive reference value of said speed-affecting system parameter indicating a value applicable should said speed control have been engaged;
***deriving*** (1009) a subsequent driver-initiated value of said speed-affecting intervention parameter; and
***presenting*** (1010) a subsequent graphical representation (4") indicative of a discrepancy between said fictive reference value and said subsequent driver-initiated value.

6. The method according to any one of claims 1-5, wherein said system-initiated value and/or said driver-initiated value respectively is indicative of a brake torque and/or force.

7. A **deviation assessment system** (1) of a vehicle (2) for supporting transitioning of speed control from an advanced driver-assistance system, ADAS, or AD, system (21) of said vehicle (2), to a vehicle driver, said deviation assessment system (1) comprising:
a **system value deriving unit** (101) for ***deriving*** (1001) a current system-initiated value of a speed-affecting system parameter pertinent to speed control by said ADAS or AD system (21), said speed-affecting system parameter being indicative of a brake force or torque utilized by said ADAS or AD system (21);
a **driver value deriving unit** (102) for ***deriving*** (1002) a value of a corresponding speed-affecting intervention parameter pertinent to a driver-initiated speed-affecting intervention of said speed control, said speed-affecting intervention parameter being indicative of a brake force or torque proportional to a force of the intervention applied by the vehicle driver to a speed-affecting driver input device (22) comprising a brake pedal or brake input device; and
a **discrepancy presenting unit** (103) for, following the transitioning of speed control from said ADAS or AD system (21) to said vehicle driver, ***presenting*** (1003) on a vehicle display (23) a graphical representation (4) indicative of a discrepancy between said system-initiated value and said driver-initiated value.

8. The deviation assessment system (1) according to claim 7, wherein said discrepancy presenting unit (103) is adapted for presenting at least a portion of said graphical representation (4), e.g. representing the driver-initiated value, according to a first colour setting when said discrepancy is below a primary deviation threshold, and according to a differing second colour setting when said discrepancy exceeds said primary deviation threshold.

9. The deviation assessment system (1) according to claim 7 or 8, further comprising:
a **ramp out unit** (104) for ***ramping out*** (1004) said speed control, said ramping out ongoing for a first time duration when said discrepancy is below a secondary deviation threshold, and ongoing for a differing second time duration when said deviation exceeds said secondary deviation threshold.

10. The deviation assessment system (1) according to any one of claims 7-9, further comprising:
an **updated system value deriving unit** (105) for ***deriving*** (1005) an updated system-initiated value of said speed-affecting system parameter;
an **updated driver value deriving unit** (106) for ***deriving*** (1006) an updated driver-initiated value of said speed-affecting intervention parameter; and
an **updated discrepancy presenting unit** (107) for ***presenting*** (1007) an updated graphical representation (4') indicative of an updated discrepancy between said updated system-initiated value and said updated driver-initiated value.

11. The deviation assessment system (1) according to claim 9 or 10, further comprising;
a **reference value deriving unit** (108) for ***deriving*** (1008) subsequent said ***ramping out*** (1004) the speed control, a fictive reference value of said speed-affecting system parameter indicating a value applicable should said speed control have been engaged;
a **subsequent driver value deriving unit** (109) for ***deriving*** (1009) a subsequent driver-initiated value of said speed-affecting intervention parameter; and
a **subsequent discrepancy presenting unit** (110) for ***presenting*** (1010) a subsequent graphical representation (4") indicative of a discrepancy between said fictive reference value and said subsequent driver-initiated value.

12. The deviation assessment system (1) according to any one of claims 7-11,
wherein said system-initiated value and/or said driver-initiated value respectively is indicative of a brake torque and/or force.

13. A vehicle (2) comprising a deviation assessment system according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

## Patentansprüche

1. Verfahren, das von einem Abweichungsbeurteilungssystem (1) eines Fahrzeugs (2) zum Unterstützen eines Übergangs einer Geschwindigkeitsregelung von einem Fahrerassistenzsystem, ADAS- oder AD-System (21) des Fahrzeugs (2) auf einen Fahrzeugfahrer, wobei das Verfahren Folgendes umfasst:
***Ableiten*** (1001) eines aktuellen systeminitiierten Werts eines geschwindigkeitsbeeinflussenden Systemparameters, der für eine Geschwindigkeitsregelung durch das ADAS- oder AD-System (21) relevant ist, wobei der geschwindigkeitsbeeinflussende Systemparameter eine Bremskraft oder ein Drehmoment angibt, die/das von dem ADAS- oder AD-System (21) verwendet wird;
***Ableiten*** (1002) eines Werts eines entsprechenden geschwindigkeitsbeeinflussenden Eingriffsparameters, der für einen fahrerinitiierten geschwindigkeitsbeeinflussenden Eingriff der Geschwindigkeitsregelung relevant ist, wobei der geschwindigkeitsbeeinflussende Eingriffsparameter eine Bremskraft oder ein Drehmoment proportional zu einer Kraft des Eingriffs angibt, die von dem Fahrzeugfahrer auf eine geschwindigkeitsbeeinflussende Eingabevorrichtung (22) angewendet wird, die ein Bremspedal oder eine Bremseingabevorrichtung umfasst; und
im Anschluss an den Übergang der Geschwindigkeitsregelung vom ADAS- oder AD-System (21) auf den Fahrzeugfahrer, ***Darstellen*** (1003), auf einer Fahrzeuganzeige (23), einer grafischen Darstellung (4), die einen Unterschied zwischen dem systeminitiierten Wert und dem fahrerinitiierten Wert angibt.

2. Verfahren nach Anspruch 1, wobei das ***Darstellen*** (1003) einer grafischen Darstellung (4) Darstellen mindestens eines Abschnitts der grafischen Darstellung (4), z. B. Darstellen des fahrerinitiierten Werts, gemäß einer ersten Farbeinstellung, wenn der Unterschied unter einem primären Abweichungsschwellenwert liegt, und gemäß einer unterschiedlichen, zweiten Farbeinstellung, wenn der Unterschied den primären Abweichungsschwellenwert überschreitet, umfasst.

3. Verfahren nach Anspruch 1 oder 2, weiter umfassend:
***Verstärken*** (1004) der Geschwindigkeitsregelung, wobei das Verstärken über einen ersten Zeitraum fortgesetzt wird, wenn der Unterschied unter einem sekundären Abweichungsschwellenwert liegt, und über einen unterschiedlichen, zweiten Zeitraum fortgesetzt wird, wenn der Unterschied den sekundären Abweichungsschwellenwert überschreitet.

4. Verfahren nach einem der Ansprüche 1-3, weiter umfassend:
***Ableiten*** (1005) eines *aktualisierten* systeminitiierten Werts des geschwindigkeitsbeeinflussenden Systemparameters;
***Ableiten*** (1006) eines aktualisierten fahrerinitiierten Werts des geschwindigkeitsbeeinflussenden Eingriffsparameters; und
***Darstellen*** (1007) einer aktualisierten grafischen Darstellung (4'), die einen aktualisierten Unterschied zwischen dem aktualisierten systeminitiierten Wert und dem aktualisierten fahrerinitiierten Wert angibt.

5. Verfahren nach Anspruch 3 oder 4, weiter umfassend:
***Ableiten*** (1008) des nachfolgenden ***Verstärkens*** (1004) der Geschwindigkeitsregelung, wobei ein fiktiver Referenzwert des geschwindigkeitsbeeinflussenden Systemparameters einen im Falle des Eingreifens der Geschwindigkeitsregelung anwendbaren Wert angibt;
***Ableiten*** (1009) eines nachfolgenden fahrerinitiierten Werts des geschwindigkeitsbeeinflussenden Eingriffsparameters; und
***Darstellen*** (1010) einer nachfolgenden grafischen Darstellung (4"), die einen Unterschied zwischen dem fiktiven Referenzwert und dem nachfolgenden fahrerinitiierten Wert angibt.

6. Verfahren nach einem der Ansprüche 1-5, wobei der systeminitiierte Wert und/oder der fahrerinitiierte Wert jeweils ein Bremsdrehmoment und/oder eine Kraft angeben.

7. **Abweichungsbeurteilungssystem** (1) eines Fahrzeugs (2) zum Unterstützen eines Übergangs einer Geschwindigkeitsregelung von einem Fahrerassistenzsystem, ADAS- oder AD-System (21) des Fahrzeugs (2) auf einen Fahrzeugfahrer, wobei das Abweichungsbeurteilungssystem (1) Folgendes umfasst:
eine **Systemwertableitungseinheit** (101) zum ***Ableiten*** (1001) eines aktuellen systeminitiierten Werts eines geschwindigkeitsbeeinflussenden Systemparameters, der für eine Geschwindigkeitsregelung durch das ADAS- oder AD-System (21) relevant ist, wobei der geschwindigkeitsbeeinflussende Systemparameter eine Bremskraft oder ein Drehmoment angibt, die/das von dem ADAS- oder AD-System (21) verwendet wird;
eine **Fahrerwertableitungseinheit** (102) zum ***Ableiten*** (1002) eines Werts eines entsprechenden geschwindigkeitsbeeinflussenden Eingriffsparameters, der für einen fahrerinitiierten geschwindigkeitsbeeinflussenden Eingriff der Geschwindigkeitsregelung relevant ist, wobei der geschwindigkeitsbeeinflussende Eingriffsparameter eine Bremskraft oder ein Drehmoment proportional zu einer Kraft des Eingriffs angibt, die von dem Fahrzeugfahrer auf eine geschwindigkeitsbeeinflussende Fahrereingabevorrichtung (22) angewendet wird, die ein Bremspedal oder eine Bremseingabevorrichtung umfasst; und
eine **Unterschieddarstellungseinheit** (103) zum ***Darstellen*** (1003) auf einer Fahrzeuganzeige (23), im Anschluss an den Übergang der Geschwindigkeitsregelung vom ADAS- oder AD-System (21) auf den Fahrzeugfahrer, einer grafischen Darstellung (4), die einen Unterschied zwischen dem systeminitiierten Wert und dem fahrerinitiierten Wert angibt.

8. Abweichungsbeurteilungssystem (1) nach Anspruch 7, wobei die Unterschieddarstellungseinheit (103) dazu angepasst ist, mindestens einen Abschnitt der grafischen Darstellung (4), z. B. Darstellen des fahrerinitiierten Werts, gemäß einer ersten Farbeinstellung anzuzeigen, wenn der Unterschied unter einem primären Abweichungsschwellenwert liegt, und gemäß einer unterschiedlichen, zweiten Farbeinstellung, wenn der Unterschied den primären Abweichungsschwellenwert überschreitet.

9. Abweichungsbeurteilungssystem (1) nach Anspruch 7 oder 8, weiter umfassend:
eine **Verstärkungseinheit** (104) zum ***Verstärken*** (1004) der Geschwindigkeitsregelung, wobei das Verstärken über einen ersten Zeitraum fortgesetzt wird, wenn der Unterschied unter einem sekundären Abweichungsschwellenwert liegt, und über einen unterschiedlichen, zweiten Zeitraum fortgesetzt wird, wenn der Unterschied den sekundären Abweichungsschwellenwert überschreitet.

10. Abweichungsbeurteilungssystem (1) nach einem der Ansprüche 7-9, weiter umfassend:
eine **Ableitungseinheit (105) des aktualisierten Systemwerts** zum ***Ableiten*** (1005) eines aktualisierten systeminitiierten Werts des geschwindigkeitsbeeinflussenden Systemparameters;
eine **Ableitungseinheit des aktualisierten Fahrerwerts** (106) zum ***Ableiten*** (1006) eines aktualisierten fahrerinitiierten Werts des geschwindigkeitsbeeinflussenden Eingriffsparameters; und
eine **Darstellungseinheit des aktualisierten Unterschieds** (107) zum ***Darstellen*** (1007) einer aktualisierten grafischen Darstellung (4'), die einen aktualisierten Unterschied zwischen dem aktualisierten systeminitiierten Wert und dem aktualisierten fahrerinitiierten Wert angibt.

11. Abweichungsbeurteilungssystem (1) nach Anspruch 9 oder 10, weiter umfassend;
eine **Referenzwertableitungseinheit** (108) zum ***Ableiten*** (1008) des nachfolgenden ***Verstärkens*** (1004) der Geschwindigkeitsregelung, wobei ein fiktiver Referenzwert des geschwindigkeitsbeeinflussenden Systemparameters einen im Falle des Eingreifens der Geschwindigkeitsregelung anwendbaren Wert angibt;
eine **Ableitungseinheit des nachfolgenden Fahrerwerts** (109) zum ***Ableiten*** (1009) eines nachfolgenden fahrerinitiierten Werts des geschwindigkeitsbeeinflussenden Eingriffsparameters; und
eine **Darstellungseinheit des nachfolgenden Unterschieds** (110) zum ***Darstellen*** (1010) einer nachfolgenden grafischen Darstellung (4"), die einen Unterschied zwischen dem fiktiven Referenzwert und dem nachfolgenden fahrerinitiierten Wert angibt.

12. Abweichungsbeurteilungssystem (1) nach einem der Ansprüche 7-11, wobei der systeminitiierte Wert und/oder der fahrerinitiierte Wert jeweils ein Bremsdrehmoment und/oder eine Kraft angeben.

13. Fahrzeug (2), das ein Abweichungsbeurteilungssystem nach einem der Ansprüche 7-12 umfasst.

14. Computerprogrammprodukt, umfassend ein Computerprogramm, das Computerprogrammcodemittel enthält, die eingerichtet sind, um einen Computer oder einen Prozessor zu veranlassen, die Schritte eines Verfahrens nach einem der Ansprüche 1-6 auszuführen, die auf einem computerlesbaren Medium oder einer Trägerwelle gespeichert sind.

15. Nichtflüchtiges computerlesbares Speichermedium, auf dem das Computerprogrammprodukt nach Anspruch 14 gespeichert ist.

## Revendications

1. Procédé mis en œuvre par un système d'évaluation de déviation (1) d'un véhicule (2) pour faciliter le passage de la commande de vitesse depuis un système avancé d'aide à la conduite, ADAS, ou système AD (21) dudit véhicule (2) à un conducteur de véhicule, ledit procédé comprenant les étapes consistant à :
***dériver*** (1001) une valeur courante initiée par le système d'un paramètre de système affectant la vitesse pertinent pour la commande de vitesse par ledit ADAS ou système AD (21), ledit paramètre de système affectant la vitesse étant indicatif d'une force ou d'un couple de freinage utilisé par ledit ADAS ou système AD (21) ;
***dériver*** (1002) une valeur d'un paramètre d'intervention affectant la vitesse correspondant pertinent pour une intervention affectant la vitesse initiée par le conducteur de ladite commande de vitesse, ledit paramètre d'intervention affectant la vitesse étant indicatif d'une force ou d'un couple de freinage proportionnel à une force de l'intervention appliquée par le conducteur de véhicule à un dispositif d'entrée (22) de conducteur affectant la vitesse comprenant une pédale de frein ou un dispositif d'entrée de frein ; et
après le passage de la commande de vitesse depuis ledit ADAS ou système AD (21) audit conducteur de véhicule, ***présenter*** (1003) sur un affichage de véhicule (23) une représentation graphique (4) indicative d'un écart entre ladite valeur initiée par le système et ladite valeur initiée par le conducteur.

2. Procédé selon la revendication 1, dans lequel ladite ***présentation*** (1003) d'une représentation graphique (4) comprend la présentation d'au moins une portion de ladite représentation graphique (4), par ex. la représentation de la valeur initiée par le conducteur, selon un premier code de couleur lorsque ledit écart est inférieur à un seuil de déviation primaire, et selon un second code de couleur différent lorsque ledit écart dépasse ledit seuil de déviation primaire.

3. Procédé selon la revendication 1 ou 2, comprenant en outre l'étape consistant à :
***sortir en rampe*** (1004) ladite commande de vitesse, ladite sortie en rampe fonctionnant pendant une première durée lorsque ledit écart est inférieur à un seuil de déviation secondaire, et fonctionnant pendant une seconde durée différente lorsque ledit écart dépasse ledit seuil de déviation secondaire.

4. Procédé selon l'une quelconque des revendications 1 à 3, comprenant en outre les étapes consistant à :
***dériver*** (1005) une valeur initiée par le système *actualisée* dudit paramètre de système affectant la vitesse ;
***dériver*** (1006) une valeur initiée par le conducteur actualisée dudit paramètre d'intervention affectant la vitesse ; et
***présenter*** (1007) une représentation graphique actualisée (4') indicative d'un écart actualisé entre ladite valeur initiée par le système actualisée et ladite valeur initiée par le conducteur actualisée.

5. Procédé selon la revendication 3 ou 4, comprenant en outre les étapes consistant à :
***dériver*** (1008), à la suite de ladite ***sortie en rampe*** (1004) de la commande de vitesse, une valeur de référence fictive dudit paramètre de système affectant la vitesse indiquant une valeur applicable dans le cas où ladite commande de vitesse aurait été engagée ;
***dériver*** (1009) une valeur initiée par le conducteur ultérieure dudit paramètre d'intervention affectant la vitesse ; et
***présenter*** (1010) une représentation graphique ultérieure (4") indicative d'un écart entre ladite valeur de référence fictive et ladite valeur initiée par le conducteur ultérieure.

6. Procédé selon l'une quelconque des revendications 1 à 5, dans lequel ladite valeur initiée par le système et/ou ladite valeur initiée par le conducteur respectivement est indicative d'un couple et/ou d'une force de freinage.

7. Système **d'évaluation de déviation** (1) d'un véhicule (2) pour faciliter le passage de la commande de vitesse depuis un système avancé d'aide à la conduite, ADAS, ou système AD (21) dudit véhicule (2), à un conducteur de véhicule, ledit système d'évaluation de déviation (1) comprenant :
une **unité de dérivation de valeur de système** (101) pour ***dériver*** (1001) une valeur courante initiée par le système d'un paramètre de système affectant la vitesse pertinent pour la commande de vitesse par ledit ADAS ou système AD (21), ledit paramètre de système affectant la vitesse étant indicatif d'une force ou d'un couple de freinage utilisé par ledit ADAS ou système AD (21) ;
une **unité de dérivation de valeur de conducteur** (102) pour ***dériver*** (1002) une valeur d'un paramètre d'intervention affectant la vitesse correspondant pertinent pour une intervention affectant la vitesse initiée par le conducteur de ladite commande de vitesse, ledit paramètre d'intervention affectant la vitesse étant indicatif d'une force ou d'un couple de freinage proportionnel à une force de l'intervention appliquée par le conducteur de véhicule à un dispositif d'entrée (22) de conducteur affectant la vitesse comprenant une pédale de frein ou un dispositif d'entrée de frein ; et
une **unité de présentation d'écart** (103) pour, après le passage de la commande de vitesse depuis ledit ADAS ou système AD (21) audit conducteur de véhicule, ***présenter*** (1003) sur un affichage de véhicule (23) une représentation graphique (4) indicative d'un écart entre ladite valeur initiée par le système et ladite valeur initiée par le conducteur.

8. Système d'évaluation de déviation (1) selon la revendication 7, dans lequel ladite unité de présentation d'écart (103) est adaptée pour présenter au moins une portion de ladite représentation graphique (4), par ex. la représentation de la valeur initiée par le conducteur, selon un premier code de couleur lorsque ledit écart est inférieur à un seuil de déviation primaire, et selon un second code de couleur différent lorsque ledit écart dépasse ledit seuil de déviation primaire.

9. Système d'évaluation de déviation (1) selon la revendication 7 ou 8, comprenant en outre :
une **unité de sortie en rampe** (104) pour ***sortir en rampe*** (1004) ladite commande de vitesse, ladite sortie en rampe fonctionnant pendant une première durée lorsque ledit écart est inférieur à un seuil de déviation secondaire, et fonctionnant pendant une seconde durée différente lorsque ledit écart dépasse ledit seuil de déviation secondaire.

10. Système d'évaluation de déviation (1) selon l'une quelconque des revendications 7 à 9, comprenant en outre :
une **unité de dérivation de valeur de système actualisée** (105) pour ***dériver*** (1005) une valeur initiée par le système actualisée dudit paramètre de système affectant la vitesse ;
une **unité de dérivation de valeur de conducteur actualisée** (106) pour ***dériver*** (1006) une valeur initiée par le conducteur actualisée dudit paramètre d'intervention affectant la vitesse ; et
une **unité de présentation d'écart actualisé** (107) pour ***présenter*** (1007) une représentation graphique actualisée (4') indicative d'un écart actualisé entre ladite valeur initiée par le système actualisée et ladite valeur initiée par le conducteur actualisée.

11. Système d'évaluation de déviation (1) selon la revendication 9 ou 10, comprenant en outre :
une **unité de dérivation de valeur de référence** (108) pour ***dériver*** (1008), à la suite de ladite ***sortie en rampe*** (1004) de la commande de vitesse, une valeur de référence fictive dudit paramètre de système affectant la vitesse indiquant une valeur applicable dans le cas où ladite commande de vitesse aurait été engagée ;
une **unité de dérivation de valeur de conducteur ultérieure** (109) pour ***dériver*** (1009) une valeur initiée par le conducteur ultérieure dudit paramètre d'intervention affectant la vitesse ; et
une **unité de présentation d'écart ultérieur** (110) pour ***présenter*** (1010) une représentation graphique ultérieure (4") indicative d'un écart entre ladite valeur de référence fictive et ladite valeur initiée par le conducteur ultérieure.

12. Système d'évaluation de déviation (1) selon l'une quelconque des revendications 7 à 11, dans lequel ladite valeur initiée par le système et/ou ladite valeur initiée par le conducteur respectivement est indicative d'un couple et/ou d'une force de freinage.

13. Véhicule (2) comprenant un système d'évaluation de déviation selon l'une quelconque des revendications 7 à 12.

14. Produit de programme informatique comprenant un programme informatique contenant des moyens de code de programme informatique agencés pour amener un ordinateur ou un processeur à exécuter les étapes d'un procédé selon l'une quelconque des revendications 1 à 6, stocké sur un support lisible par ordinateur ou une onde porteuse.

15. Support de stockage non volatile lisible par ordinateur stockant ledit produit de programme informatique selon la revendication 14.
